(19) Europäisches Patentamt / European Patent Office / Office européen des brevets

(11) **EP 2 428 935 B1**

(12) **EUROPEAN PATENT SPECIFICATION**

(45) Date of publication and mention
of the grant of the patent:
**02.11.2016 Bulletin 2016/44**

(51) Int Cl.:
***G06T 15/50*** *(2006.01)*

(21) Application number: **11180935.6**

(22) Date of filing: **12.09.2011**

(54) **Method for estimating the scattering of light in a homogeneous medium**

Verfahren zur Einschätzung der Lichtverteilung in einem homogenen Medium

Procédé d'évaluation de diffusion de la lumière dans un support homogène

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2010 FR 1057329**

(43) Date of publication of application:
**14.03.2012 Bulletin 2012/11**

(73) Proprietor: **Thomson Licensing**
**92130 Issy-les-Moulineaux (FR)**

(72) Inventors:
  • **Gautron, Pascal**
    **35510 Cesson Sevigne (FR)**
  • **Marvie, Jean- Eudes**
    **35510 Cesson Sevigne (FR)**
  • **Mocquard, Olivier**
    **35510 Cesson Sevigne (FR)**

(74) Representative: **Perrot, Sébastien**
**Technicolor R&D France Snc**
**975, avenue des Champs Blancs**
**CS 17616**
**35576 Cesson-Sévigné Cedex (FR)**

(56) References cited:
• **TOKUYOSHI Y ET AL: "A fast rendering method for a scene with participating media of anisotropic scattering property", COMPUTER GRAPHICS INTERNATIONAL 2005 STONY BROOK, NY, USA JUNE 22-24, 2005, PISCATAWAY, NJ, USA,IEEE, 22 June 2005 (2005-06-22), pages 227-233, XP010830152, DOI: DOI:10.1109/CGI.2005.1500423 ISBN: 978-0-7803-9330-1**
• **ANONYMOUS: "Spherical harmonic lighting -From Wikipedia, the free encyclopedia", , 15 February 2010 (2010-02-15), pages 1-1, XP002645248, Retrieved from the Internet: URL:http://en.wikipedia.org/wiki/Spherical _harmonic_lighting [retrieved on 2011-06-22]**
• **ANONYMOUS: "Cube Mapping - From Wikipedia, the free encyclopedia", , 4 September 2010 (2010-09-04), pages 1-4, XP002645249, Retrieved from the Internet: URL:http://en.wikipedia.org/w/index.php?ti tle=Cube_mapping&oldid=382811314 [retrieved on 2011-06-20]**
• **SCHÖNEFELD V: "Spherical Harmonics", INTERNET CITATION, July 2005 (2005-07), pages 1-25, XP002599101, Retrieved from the Internet: URL:http://heim.c-otto.de/~volker/prosem_p aper.pdf [retrieved on 2010-08-30]**

EP 2 428 935 B1

**Description**

**1. Scope of the invention**

The invention relates to the field of composition of computer generated pictures, and more particularly to the field of light scattering simulation in a homogeneous participating medium. The invention also falls within the scope of special effects for a live composition.

**2. Prior art**

According to the prior art, different methods exist to simulate the scattering of light in participating media, such as for example water, fog, smoke, dust or the clouds. The participating media correspond to media composed of airborne particles which interact with the light to modify its path and intensity in particular.

The participating media can be broken down into two parts, i.e. homogeneous media, such as water and heterogeneous media, such as smoke or clouds. In the case of homogeneous participating media, it is possible to compute, in an analytical manner, the attenuation of the light sent by a light source. Indeed, as a result of their homogeneous nature, these media present parameters such as the light absorption coefficient or the light scattering coefficient of constant value at any point of the medium. On the contrary, the light absorption and scattering properties vary from one point to another in a heterogeneous participating medium.

To perform the live rendering of homogeneous participating media, some methods carry out the pre-computation of some parameters representative of the homogeneous participating medium. Whereas these methods are ideally suited for use in a post-production studio for example and give a good quality rendering, these methods are not suitable within the context of interactive design and live high-quality rendering composition of a homogeneous participating medium. Such a method is for example described in patent application WO2009/003143 filed by Microsoft Corporation and published on 31 December 2008. The purpose of the invention subject of the WO2009/003143 application is a live software for the rendering of a participating medium and describes a solution using radial basic functions. This solution cannot however be considered as a live rendering solution since some pre-processing operations must be applied off line to the participating medium to be able to compute coefficients of projection representing the medium which will be used for picture synthesis live computations.

Document entitled "A fast rendering method for a scene with particular media of anisotropic scattering property, published on June 22, 2005 in the Proceedings of Computer Graphics International 2005, discloses a method for global illumination rendering of a scene with a participating media, the method being based on a ray marching algorithm using a photon map.

Document entitled "Spherical harmonic lighting" retrieved from the internet at URL http://en.wikipedia.org/wiki(Spherical harmonic lighting and dated February 15, 2010, discloses real-time rendering techniques for producing realistic shading and shadowing by replacing parts of standard lighting equations with spherical functions projected into frequency space using the spherical harmonics as basis.

Document entitled "Cube mapping" retrieved from the internet at http://en.wikipedia.org/w/index.php?title=Cube mapping&oldid=382811314 and dated September 4, 2010, discloses a method for environment mapping that uses a six-sided cube as the map shape.

With the emergence of games and interactive simulation applications, in particular in three dimensions (3D), the need arises for live simulation methods offering a high-quality and realistic rendering of homogeneous participating media.

**3. Summary of the invention**

The purpose of the invention is to overcome at least one of these disadvantages of the prior art.

More particularly, the purpose of the invention is to optimize the computing times and/or the computing power necessary to compose a live realistic rendering of the light scattering in a homogeneous participating medium.

The invention relates to a computer implemented method according to claim 1.

Advantageously, the analytical estimation of the scattered light quantity comprises the direct computation of an integral representative of the light diffusion along the at least one direction of the light in the homogeneous participating medium.

According to a particular characteristic, the estimation of the first set of coefficients of projection is made by projection of an environment mapping representative of the environment lighting onto the orthonormal basis of spherical functions.

Advantageously, the spherical functions are of the harmonic spherical type.

According to a particular characteristic, the environment lighting comprises a plurality of light sources, the plurality of light sources being at the optical infinite of the participating medium.

According to a particular characteristic, the first and second sets of coefficients of projection are stored in at least one table of a memory associated with at least one graphics processor.

## 4. List of figures

The invention will be better understood, and other specific features and advantages will emerge upon reading the following description, the description making reference to the annexed drawings wherein:

- figure 1 diagrammatically illustrates a homogeneous participating medium diffusing light, according to a particular embodiment of the invention,
- figures 2A and 2B illustrate a environment lighting comprising several light sources, according to a particular embodiment of the invention,
- figure 3 diagrammatically illustrates a method for estimating the quantity of light scattered by a medium of figure 1 lighted by a environment lighting of figures 2A and 2B, according to a particular embodiment of the invention,
- figure 4 illustrates a device implementing a method for estimating the quantity of scattered light, according to a particular implementation embodiment of the invention,
- figures 5 and 6 illustrate a method for estimating the quantity of scattered light, according to two particular embodiments of the invention.

## 5. Detailed description of embodiments of the invention

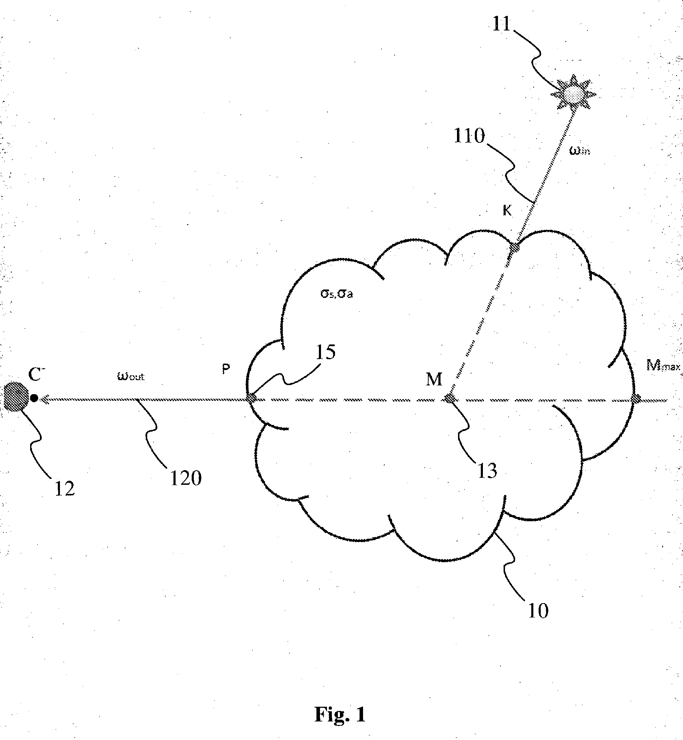

**Figure 1** illustrates a virtual environment or a virtual scene bathing in a homogeneous participating medium 10, for example fog, smoke or dust. A participating medium is a medium composed of a multitude of airborne particles which absorbs, sends out and/or scatters (diffuses) light. In its simplest form, a participating medium only absorbs light, for example light received from a light source 11 such as the sun for example. This means that light passing through the medium 10 is attenuated, the attenuation depending on the medium density. The medium 10 is homogeneous; i.e. the physical characteristics of the medium, such as the density of the particles composing it for example, are constant from one point to another in the medium. Since the participating medium is composed of small particles which interact with the light, the incident light, i.e. received from the light source 11 along a direction $\omega_{in}$ 110 is not only absorbed but also scattered. In a participating medium with isotropic scattering, the light is scattered uniformly in all directions. In a participating medium with anisotropic scattering, such as the medium 10 illustrated in figure 1, the scattering of light depends on the angle between the direction of incidence $\omega_{in}$ 110 and the direction of scattering $\omega_{out}$ 120 of light, the direction of scattering $\omega_{out}$ 120 also corresponding to the viewing direction of a viewer looking at the medium 10. The quantity of light scattered at a point M 13 of the medium 10 in the direction of scattering $\omega_{out}$ 120 is calculated by the following equation:

$$Q(M, \omega_{out}) = \sigma_s(M) \cdot p(M, \omega_{out}, \omega_{in}) \cdot L_{ri}(M, \omega_{in}) \qquad \text{Equation 1}$$

The quantity of light scattered by a point M 13 of the medium reaching the eye of a viewer 12 located in a point C of the space in the direction $\omega_{out}$ 120, i.e. the quantity of light scattered by point M and attenuated by the medium 10 over the path M-P, point P being located at the intersection of the medium 10 and of the direction $\omega_{out}$ in the direction of the viewer 12, then is:

$$L_P(M, \omega_{out}) = Q(M, \omega_{out}) \cdot exp^{\int_M^P -\sigma_t \, ds} \qquad \text{Equation 2}$$

for which:

- $\sigma_s$ is the scattering coefficient of the medium,
- $\sigma_a$ is the absorption coefficient of the medium,
- $\sigma_t = \sigma_s + \sigma_a$ is the extinction coefficient of the medium,
- $p(M, \omega_{out}, \omega_{in})$ is the phase function describing how the light coming from the direction of incidence $\omega_{in}$ is scattered in the direction of scattering $\omega_{out}$ at point M,
- $L_{ri}(M, \omega_{in})$ is the reduced luminous intensity at point M coming from the direction of incidence $\omega_{in}$ 110 and represents the quantity of incident light arriving at point M after scattering over the path of light in the medium 10,

- $exp^{\int_M -\sigma_t(s)ds}$ represents the scattered luminance attenuation due to the absorption and scattering along the path from P 15 to M 13.

Equation 2 makes it possible to calculate the quantity of light scattered by a point M and reaching the eye of a viewer 12 located in direction $\omega_{out}$. To calculate the quantity of light received by a viewer looking in direction $\omega_{out}$, it is then necessary to add up all the contributions of all the points of the medium located on axis $\omega_{out}$, i.e. the points located on segment P-$M_{max}$, P and $M_{max}$ being the two points of intersection between the medium 10 and the direction $\omega_{out}$ 120. This total scattered luminance arriving in P 15 from direction $\omega_{out}$ 120 due to simple scattering then is:

$$ L(P, \omega_{out}) = \int_P^{M_{max}} L_p(M, \omega_{out})dM \qquad \text{Equation 3} $$

It is assumed here that the light covering the C-P path is not attenuated as the light is not attenuated outside of the medium 10.

This total scattered luminance is obtained by integrating the contributions of all the points located between P and $M_{max}$ on a radius having $\omega_{out}$ as direction.

Advantageously, the homogeneous participating medium 10 is a three-dimensional element represented in two dimensions on figure 1 for clarity.

According to one variant, the virtual environment bathing in the medium 10 comprises one or more virtual objects, not represented on figure 1, modelled according to any method known by a person skilled in the art, for example by polygonal modelling, in which the model is likened to a set of polygons, each defined by the list of apexes and edges composing it, by curve modelling of the NURBS ("Non uniform rational basic spline") type, in which the model is defined by a set of curves created thanks to control vertices, by surface subdivision modelling, etc. "Virtual object" is understood to mean any virtual representation (obtained by modelling) of an object (real or fictitious) composing a real environment (for example, the ground, a house or front of a house, a car, a tree, i.e. any element composing an environment such as a room of a house, a street, a town, the countryside, etc.). In the case where a virtual object is in the medium 10 in the viewing direction of the viewer $\omega_{out}$, point $M_{max}$ corresponds to the point of intersection between direction $\omega_{out}$ and virtual object.

According to one variant, the medium 10 is ruminated by multiple light sources, for example 100,1,000,100,000 or 1,000,000 light sources.

According to another variant, the medium 10 is illuminated by a continuous environment lighting, i.e. comprising an infinite number of light sources.

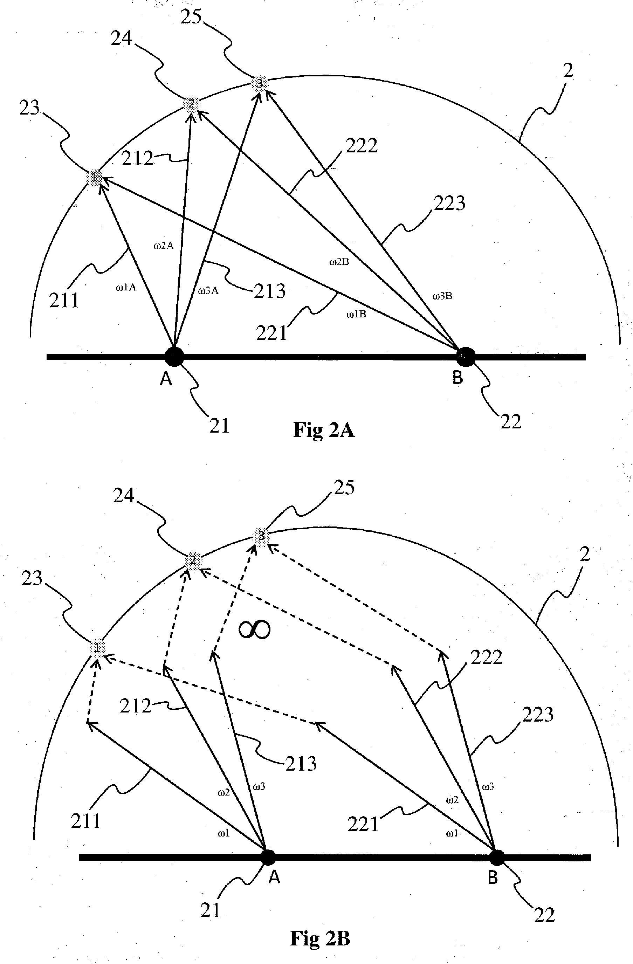

**Figures 2A and 2B** illustrate a environment lighting 2 comprising several light sources 23, 24 and 25. Identical reference signs are used for identical elements on figures 2A and 2B. Figure 2A more particularly illustrates two points A 21 and B 22 illuminated by three light sources 23, 24 and 25. Point A 21 is illuminated by the first light source 23 along a direction $\omega_{1A}$ 211, by the second light source 24 along a direction $\omega_{2A}$ 212 and by the third light source 25 along a direction $\omega_{3A}$ 213. Point B 22 is illuminated by the first light source 23 along a direction $\omega_{1B}$ 221, by the second light source 24 along a direction $\omega_{2B}$ 222 and by the third light source 25 along a direction $\omega_{3B}$ 223. The problem posed by such a complex environment lighting, since possessing several light sources, is that it is very expensive in terms of calculation for an estimation of the incident light in a medium, since the direction of light between a source and a point of the medium is different for each point of the medium. Indeed, the direction taken by the light emitted by the first source 23 is different for A and for B, la direction taken by the light emitted by the second source 24 is different for A and for B and the direction taken by the light emitted by the third source 25 is different for A and for B. To solve this problem, the estimation of the light coming from several remote light sources is made by using the environment mapping method according to a particular embodiment of the invention, such as illustrated in figure 2B. Rather than considering an exact direction of the light between points A and B on the one hand and light sources 23, 24, 25 on the other hand (such as illustrated on figure 2A), the method known as environment mapping considers that all the light sources 23, 24 and 25 of the environment 2 are located at the optical infinite with respect to points A and B. It is possible in this way to consider that the directions taken by the light emitted by a light source 23, 24 or 25 are identical irrespective of points A and B of the medium considered. The parallax effect due to the distance separating points A and B is neglected in this way. The direction $\omega_{1A}$ 211 connecting point A to the first light source 23 is considered as being identical to the direction $\omega_{1B}$ 221 connecting point B to the first light source 23. In the same manner, the direction $\omega_{2A}$ 212 connecting point A to the second light source 24 is considered as being identical to the direction $\omega_{2B}$ 222 connecting point B to the second light source 24 and the direction $\omega_{3A}$ 213 connecting point A to the third light source 25 is considered as being identical to the direction

$\omega_{3B}$ 223 connecting point B to the third light source 23.

According to one variant, the environment lighting comprises two or more than three light sources, for example 1,000, 100,000 or 1,000,000 light sources.

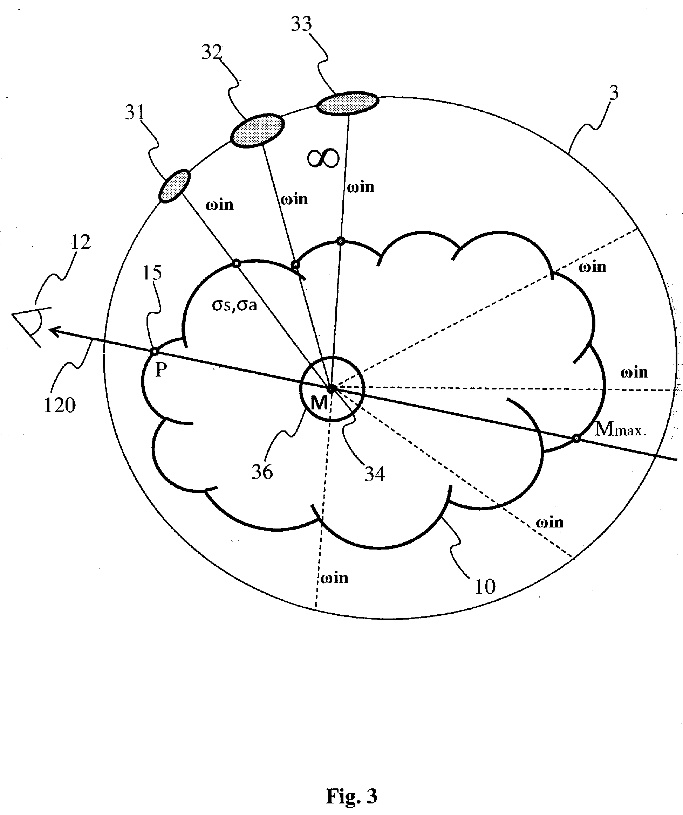

**Figure 3** illustrates a computer implemented method for estimating the quantity of light scattered by a medium 10, the light coming from a environment lighting 3 comprising a multitude of light sources 31, 32 and 33, according to a particular embodiment of the invention. To solve in an analytical way the equation of simple light scattering by the medium 10 along the direction of scattering $\omega_{out}$ 120 (corresponding to equation 3), the following assumptions are made:

- The multiple inter-reflections and the multiple scattering generate a "soft" lighting (i.e. of low frequency): the same environment mapping is used to represent the incident light at any point of the medium 10, irrespective of the location of the point in the medium 10; in other words, the function of incident luminance described by the environment mapping of the medium 10 is independent of the point of the medium 10 for which it is evaluated. The incident luminance function is only dependent on the direction of incidence $\omega_{in}$ considered. Moreover, no light shaft is generated since the light shafts are generated by the direct illumination of an object of the virtual environment, and
- The participating medium is homogeneous, as this is the case for example in media of the fog, airborne dust type or in aquatic environments; the density is constant at any point of the medium and the optical properties of the medium (for example the medium scattering and absorption coefficients) are constant at any point of the medium.

As this has been described with respect to figure 1, the light scattered in a M 13 by the medium 10 is a composition of the attenuation of the light received by the medium 10 of a light source 11 and of the scattering of this quantity of attenuated light received by the medium 10. Starting from the equation 3 of simple scattering of the medium 10 by a single light source and by developing it, the following equation 4 is obtained:

$$L(P,\omega_{out}) = \int_{P}^{Mmax} \sigma_s(M).p(M,\omega_{out},\omega_{in}).L_{ri}(M,\omega_{in}).exp^{\int_{P}^{M} -\sigma_t(s)ds} dM \tag{4}$$

Since the light comes from each direction $\omega_{in}$ of the environment lighting 3, the following equation 5 is obtained:

$$L(P,\omega_{out}) = \int_{P}^{Mmax} \sigma_s(M)\int_{\Omega} p(M,\omega_{out},\omega_{in}).L_{ri}(M,\omega_{in})d\omega_{in}.exp^{\int_{P}^{M} -\sigma_t(s)ds} dM \tag{5}$$

where $\Omega$ represents all the directions of incidence $\omega_{in}$ at point M in a unit ball 36 centred on M. Since the environment lighting 3 is continuous, there is an infinite number of directions of incidence $\omega_{in}$.

As the participating medium is considered as being homogeneous, the average optical properties of the participating medium are constant, i.e. the scattering $\sigma_s(M)$, absorption $\sigma_a(M)$ and extinction $\sigma_t(M)$ coefficients and the phase function $p(M,\omega_{out},\omega_{in})$ are constant at any point M of the participating medium 10: $\sigma_s(M)=\sigma_s$; $\sigma_a(M)=\sigma_a$; $\sigma_t(M)=\sigma_t$ and $p(M,\omega_{out},\omega_{in})=p(\omega_{out},\omega_{in})$. The equation 5 then becomes the following equation 6:

$$L(P,\omega_{out}) = \int_{P}^{Mmax} \sigma_s\int_{\Omega} p(\omega_{out},\omega_{in}).L_{ri}(M,\omega_{in})d\omega_{in}.exp^{-\sigma_t\|P-M\|} dM \tag{6}$$

According to our assumptions, the light is considered independent of the location of the illuminated point in the participating medium 10. The equation 6 is simplified as follows to result in the following equation 7:

$$L(P,\omega_{out}) = \int_{P}^{Mmax} \sigma_s\int_{\Omega} p(\omega_{out},\omega_{in}).L_{ri}(\omega_{in})d\omega_{in}.exp^{-\sigma_t\|P-M\|} dM \tag{7}$$

Let us now consider the internal integral of the equation 7 above comprising the product of the incident light and of the phase function of the medium:

$$L_i(\omega_{out}) = \int_{\Omega} p(\omega_{out},\omega_{in}).L_{ri}(\omega_{in})d\omega_{in} \qquad \text{Equation 8}$$

Each function of the functional space can be written as a linear combination of basic functions, a basic function being an element of a base for a functional space. By using an orthonormal basis of spherical functions and by projecting functions $L_{ri}$ and p onto the orthonormal basis of spherical functions, it is possible to represent functions $L_{ri}$ and p, respectively by:

$$L_{ri}(\omega_{in}) \approx \sum_{j} \lambda^{j}_{L_{ri}} Y^{j}(\omega_{in})$$

Equation 9

$$p(\omega_{in}, \omega_{out}) \approx \sum_{j} \lambda^{j}_{p(\omega_{out})} Y^{j}(\omega_{in})$$

Equation 10

where $\lambda^{j}_{L_{ri}}$ is the $j^{th}$ coefficient of projection (out of a total of Nc coefficients, Nc corresponding to a number of coefficients fixed in a predetermined manner) representative of the incident light in the basic function $Y^{j}(\omega_{in})$ and where $\lambda^{j}_{p(\omega_{out})}$ is the $j^{th}$ coefficient of projection (out of a total of Nc coefficients, Nc corresponding to a number of coefficients fixed in a predetermined manner) representative of the phase function in the basic function $Y^{j}(\omega_{in})$.

Two sets of Nc basic function coefficients of projection calculated in this way are stored in one or more tables of a GPU memory. The first set of coefficients is representative of the attenuation of the light sent out by a environment lighting comprising several light sources due to the simple scattering of the light from any direction for each point of the medium 10. The second set of coefficients is representative of the phase function of the medium 10.

Advantageously, the phase function and the incident luminance function are represented in a single and same orthonormal basis of spherical functions.

As the basic functions are orthonormal, we have the following properties:

$$\int_{\Omega} Y^{j}(\omega_{in}) . Y^{j}(\omega_{in}) d\omega_{in} = 1 \quad \forall j$$

Equation 11

$$\int_{\Omega} Y^{j}(\omega_{in}) . Y^{i}(\omega_{in}) d\omega_{in} = 0 \quad \forall i \neq j$$

Equation 12

It is thus possible to benefit from the properties above by replacing $L_{ri}$ and p in the equation of $L_i$:

$$L_{i}(\omega_{out}) \approx \int_{\Omega} \sum_{j} \lambda^{j}_{p(\omega_{out})} Y^{j}(\omega_{in}) . \sum_{j} \lambda^{j}_{L_{ri}} Y^{j}(\omega_{in}) d\omega_{in}$$

Equation 13

$$L_{i}(\omega_{out}) \approx \sum_{j} \lambda^{j}_{p(\omega_{out})} . \lambda^{j}_{L_{ri}}$$

Equation 14

By incorporating this last expression into the equation 7, we obtain:

$$L(P, \omega_{out}) \approx \int_{P}^{Mmax} \sigma_{s} \sum_{j} \lambda^{j}_{p(\omega_{out})} . \lambda^{j}_{L_{ri}} exp^{-\sigma_{t}\|P-M\|} dM$$

Equation 15

And by taking out the terms independent of the location of M outside the integral, we obtain:

$$L(P, \omega_{out}) \approx \sigma_s . \sum_j \lambda^j_{p(\omega_{out})} . \lambda^j_{L_{ri}} \int_P^{Mmax} exp^{-\sigma_t \|P-M\|} dM$$

Equation 16

The remaining integral is analytically solved as follows:

$$\int_P^{Mmax} exp^{-\sigma_t \|P-M\|} dM = \frac{1 - exp(-\sigma_t \|Mmax - P\|)}{\sigma_t}$$

Equation 17

The final equation making it possible to analytically estimate the quantity of light scattered by the medium 10 along a direction of scattering $\omega_{out}$ 120 is then obtained:

$$L(P, \omega_{out}) \approx \sigma_s . \sum_j \lambda^j_{p(\omega_{out})} . \lambda^j_{L_{ri}} \frac{1 - exp(-\sigma_t \|Mmax - P\|)}{\sigma_t}$$

Equation 18

The equation 18 has the advantage of being calculable analytically and live according to the view point, i.e. to the viewing direction of the viewer looking at the virtual environment bathing in the participating medium 10. Solving analytically the equation 18 (or equally the equation 16) has the advantage of being more precise than solving the equation numerically. Indeed, an analytical solving of the equation provides an exact solution of the equation whereas a numeral solving provides an approximate solution of the equation. The estimation of the scattered light quantity via the solving of equation 18 is analytical in that it comprises the direct computation of an integral representative of the light diffusion along direction of the light in the homogeneous participating medium (equation 17).

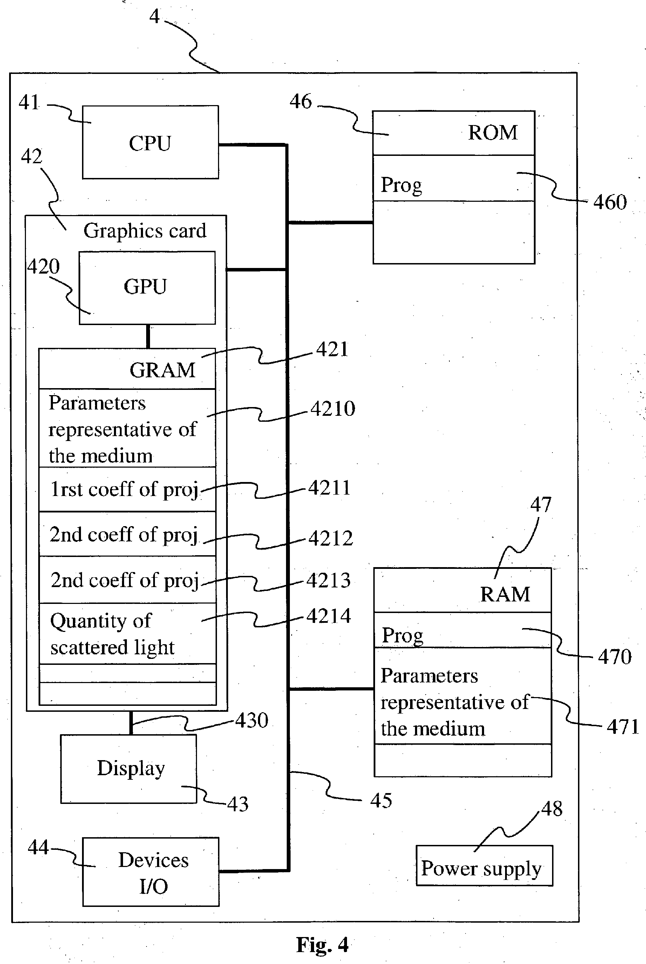

**Figure 4** diagrammatically illustrates a hardware embodiment of a device 4 suited to the estimation of the quantity of light scattered by a homogeneous participating medium 10 and to the creation of signals for displaying one or more images. The device 4 corresponding for example to a personal computer PC, a laptop or a game console.

The device 4 comprises the following elements, connected together by an address and data bus 45 which also transports a clock signal:

-    a microprocessor 41 (or CPU),
-    a graphics card 42 comprising:

    •    several graphics processing units 420 (or GPUs);
    •    a random access memory of the GRAM ("Graphical Random Access Memory") type 421;

-    a non-volatile memory of the ROM ("Read Only Memory") type 46;
-    a random access memory or RAM 47;
-    one or more I/O ("Input/Output") devices 44, such as for example a keyboard, a mouse, a webcam; and
-    a power supply 48.

The device 4 also comprises a display device 43 of the display screen type directly connected to the graphics card 42 to display in particular the rendering of computer-generated graphics calculated and composed in the graphics card, for example in live. The use of a dedicated bus to connect the display device 43 to the graphics card 42 offers the advantage of having much higher data transmission rates and of diminishing in this way the latency time for the display of images composed by the graphics card. According to one variant, a device to display is external to the device 4 and is connected to the device 4 by a cable transmitting the display signals. The device 4, for example the graphics card 42, comprises a transmission medium or connector (not represented on figure 4) suited to transmit a display signal to an external display means such as for example an LCD or plasma screen, a video projector.

It is noted that the word "register" used in the description of memories 42, 46 and 47 designates in each of the mentioned memories a memory zone of low capacity (some binary data) as well as a memory zone of large capacity (enabling a whole programme to be stored or all or part of the data representative of data calculated or to be displayed).

When powered up, the microprocessor 41 loads and runs the instructions of the program contained in the RAM 47.

The random access memory 47 comprises in particular:

- in a register 430, the operating programme of the microprocessor 41 responsible for switching on the device 4;
- parameters 471 representative of the homogeneous participating medium 10 (for example, parameters of density, light absorption coefficients and light scattering coefficients).

The algorithms implementing the steps of the method specific to the invention and described below are stored in the GRAM memory 47 of the graphics card 42 associated with the device 4 implementing these steps. When powered up and once the parameters 470 representative of the medium are loaded into RAM 47, the graphics processing units 420 of the graphics card 42 load these parameters into GRAM 421 and execute the instructions of these algorithms in the form of microprograms of the "shader" type using the HLSL ("High Level Shader Language") language, the GLSL ("OpenGL Shading language") language for example.

The GRAM random access memory 421 comprises in particular:

- in a register 4210, the parameters representative of the medium 10,
- of the first coefficients of projection 4211 representative of the incident light at any point of the medium 10,
- of the second coefficients of projection 4212 representative of the phase function at any point of the medium 10, and
- of values 4214 representative of the quantity of light scattered by the medium 10 along one or more directions of observation.

According to a variant, a part of the RAM 47 is allocated by the CPU 41 to store the coefficients 4211 and 4212 and the values 4214 if the memory space available in GRAM 421 is insufficient. This variant however brings about longer latency times in the composition of an image comprising a representation of the medium 10 composed from the microprograms contained in the GPU since the data must be transmitted from the graphics card to the random access memory 47 by means of the bus 45 whose transmission capacities are generally lower than those available in the graphics card to transfer the data from the GPU to the GRAM and vice-versa.

According to another variant, the power supply 48 is external to the device 4.

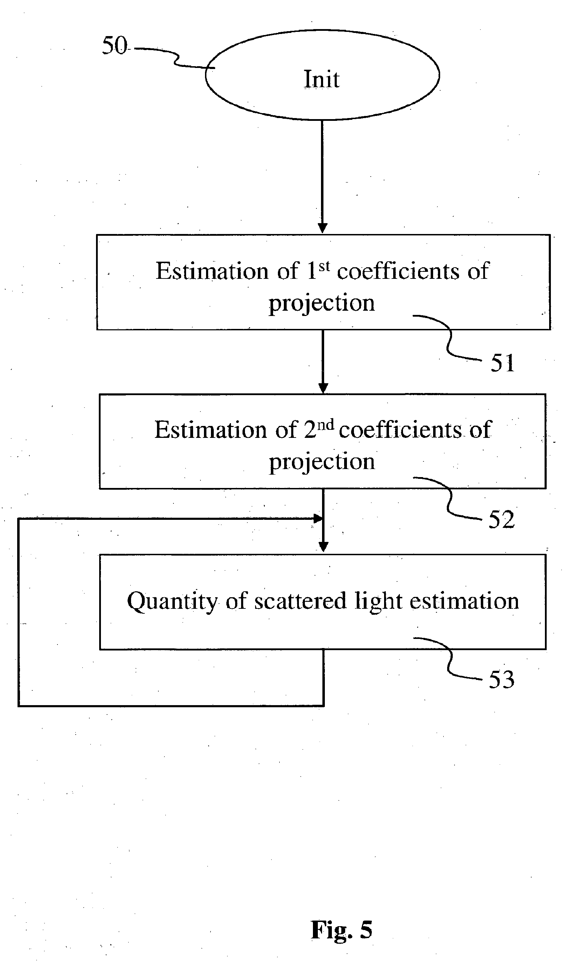

**Figure 5** illustrates a computer implemented method for estimating the quantity of light scattered by a homogeneous participating medium implemented in a device 4, according to a first particularly advantageous non-restrictive implementation embodiment of the invention.

During an initialization step 60, the various parameters of the device 4 are updated. In particular, the parameters representative of the homogeneous participating medium 10 are initialized in any way.

Then, during a step 51, a first set of first coefficients of projection of a basic function in an orthonormal basis of spherical functions is estimated, these first coefficients of projection being representative of the incident luminance at any point of the homogeneous participating medium 10. To do so, the incident luminance function $L_{ri}(M,\omega_{in})$, which represents the quantity of incident light arriving at a point M of the medium after light scattering in the participating medium 10 along the direction of 'incidence $\omega_{in}$, is projected onto an orthonormal basis of spherical functions. The function describing the environment mapping 3 (known as incident luminance function) representative of the incident light in the medium 10 is represented by using the orthonormal basis of spherical functions. The infinite number of directions of incidence $\omega_{in}$ for which the first coefficients of projection are obtained forms a sphere $\Omega$ having as centre any point M of the virtual environment. The number of first coefficients of projection is chosen in such a manner as to find the best compromise between the computing power necessary for the calculation of these coefficients and the accuracy of the estimation of the quantity of light scattered along a direction of scattering $\omega_{out}$ desired by a user of the device 4. As the environment lighting is considered as being at the optical infinite of the participating medium 10, the inter-reflections of the light inside the participating medium 10 are neglected and the values of the first coefficients are identical at any point M of the participating medium 10.

Then, during a step 52, a first set of first coefficients of projection of a basic function in an orthonormal basis of spherical functions is estimated, these first coefficients of projection being representative of the incident luminance at any point of the homogeneous participating medium 10. To do so, the function describing the phase function of the medium 10 is represented by using the orthonormal basis of spherical functions that was used in the representation of the incident luminance function. The phase function is thus projected onto a second set of second projection coefficients of a base of spherical functions. The phase function describes how the light coming from the direction of incidence $\omega_{in}$ is scattered in the direction of scattering $\omega_{out}$ at point M. Since the participating medium 10 is homogeneous, the phase function p is independent on the location of the point M considered of the participating medium 10. The function phase p is only dependent on the direction of incidence $\omega_{in}$ of the incident light and on the direction of scattering $\omega_{out}$ of the scattered light, for example dependent on the angle formed by directions $\omega_{in}$ and $\omega_{out}$. The infinite number of directions of incidence $\omega_{in}$ for which the second coefficients of projection are obtained form a sphere $\Omega$ having as centre any point M of the virtual environment. Advantageously, the sphere formed in this way is identical to the sphere formed by the directions of incidence associated with the first coefficients of projection. The number of second coefficients of projection is chosen in such a manner as to find the best compromise between the computing power necessary for the calculation of these coefficients and the accuracy of the estimation of the quantity of light scattered along a direction of scattering $\omega_{out}$ desired by a user of the device 4. Advantageously, the number of first coefficients is equal to the number of second coefficients.

Then, during a step 53, the quantity of light scattered by the medium 10 along a sending direction 120 is estimated by using the first coefficients of projection and the second coefficients of projection estimated previously. To do so, the equation 18 is solved analytically. No precalculation is then necessary to make the rendering of the light scattering in a homogeneous participating medium authorizing the live rendering of such media in interactive applications of the video game type for example in which the user is led to move virtually in a space comprising one or more homogeneous participating media.

Advantageously, the quantity of light scattered by the medium 10 is estimated for several sending directions. By adding up these estimated quantities of light for multiple sending directions, the total quantity of light scattered by the medium 10 and perceived by a viewer 12 looking at the medium 10 is obtained.

The step 53 is advantageously reiterated as soon as a viewer 12 moves-around the medium 10, the image forming the rendering of the medium 10 being reconstructed for each elementary displacement of the viewer 12 around the medium 10. As the first coefficients of projection are valid for each point M of the medium 10, just like the second coefficients of projection, it is not necessary to calculate again the first coefficients of projection or the second coefficients of projection, when the view point of the viewer 12 changes, i.e. when the viewing direction (equivalent to the direction of scattering $\omega_{out}$) changes. Only the step 53 is reiterated when the view point of the viewer 12 changes.

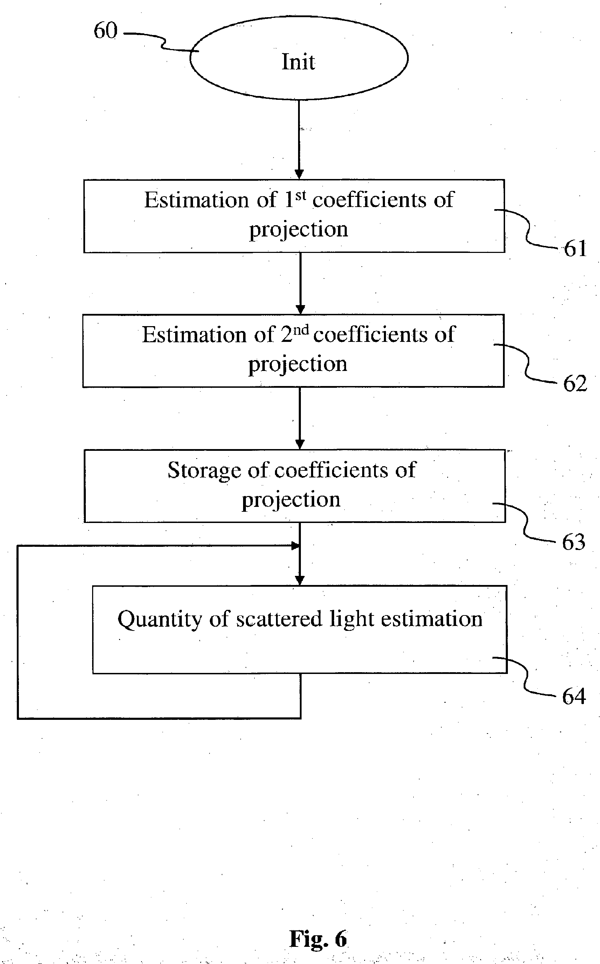

**Figure 6** illustrates a computer implemented method for estimating the quantity of light scattered by a homogeneous participating medium implemented in a device 4, according to a second particularly advantageous non-restrictive implementation embodiment of the invention.

During an initialization step 60, the various parameters of the device 4 are updated. In particular, the parameters representative of the homogeneous participating medium 10 are initialized in any way.

Then, during steps 61 and 62, first coefficients of projection representative of the quantity of incident light received at any point of the homogeneous participating medium 10 and of the second coefficients of projection representative of the phase function of the medium 10 are estimated in the same manner as that described with respect to steps 51 and 52 of figure 5. Steps 61 and 62 are therefore not detailed again here.

Then during a step 63,the first coefficients of projection and the second coefficients of projection estimated before are recorded and stored in a data structure composed of tables recorded in a memory associated with the GPU. These recordings are called luminance recordings and phase recordings, respectively. The luminance and phase recording tables advantageously comprise all the first coefficients of projection and the second coefficients of projection. Such a storage of the coefficients of projection has the advantage of accelerating the calculations for estimating the quantity of light scattered by the medium 10 and perceived by a viewer, the first and second coefficients of projection being available at any time and immediately for use in the equation 18.

Lastly, during a step 64, the quantity of scattered light is estimated in the same manner as that described with respect to step 53 of figure 5.

Naturally, the invention is not limited to the embodiments previously described.

In particular, the invention is not limited to a method for estimating the quantity of light scattered by a homogeneous participating medium but also extends to any device implementing this method and in particular all devices comprising at least one GPU. The implementation of the equations described with respect to figures 1 to 3 for the estimation of the first and second coefficients of projection and of the quantity of scattered light is not either limited to an implementation in micrograms of the shader type but also extends to an implementation in any type of program, for example programs executable by a microprocessor of the CPU type.

Advantageously, the basic functions used for the estimation of the coefficients of projection are functions of the spherical harmonic type or of the spherical wavelet type.

The use of the invention is not limited to a live use but also extends to any other use, for example for so-called post-production processing operations in a recording studio for the rendering of computer generated pictures for example. The implementation of the invention in post-production offers the advantage of giving an excellent visual rendering in terms of realism in particular while reducing the necessary computing times.

The invention also relates to a method for composing a video image in two dimensions or in three dimensions, for which the quantity of light scattered by a homogeneous participating medium is computed and the information representative of the luminance resulting from it is used for the display of the image pixels, each pixel corresponding to a viewing direction along a viewing direction $\omega_{out}$. The luminance value computed for display by each of the image pixels is recomputed to adapt to the various view points of the viewer.

The present invention can be used in video game applications for example, whether by programs executable in a computer of the PC or laptop type, or in specialized game consoles producing and displaying live images. The device 4 described with respect to figure 4 advantageously has interaction means, such as keyboard and/or joystick, other modes to enter commands such as for example voice recognition being also possible.

**Claims**

1. Computer implemented method for estimating the quantity of light scattered by a homogeneous participating medium (10), the light being sent out by a environment lighting (3), said method comprising the following steps:

   - estimation (51,61) of a first set of coefficients of projection in an orthonormal basis of spherical functions, said first set of coefficients of projection being representative of the incident luminance function received by said participating medium (10),
   - estimation (52,62) of a second set of coefficients of projection in said orthonormal basis of spherical functions, said second set of coefficients of projection being representative of the phase function of said participating medium (10),

   the method being **characterized in that** it further comprises the step of:

   - estimation (53, 64) of the quantity of light scattered by said participating medium (10), along at least one direction of diffusion of the light, from said first and second sets of coefficients of projection, said estimation comprising a direct analytical computation of an integral representative of the light diffusion along the at least one direction of the light in the homogeneous participating medium.

2. Computer implemented method according to claim 1, **characterized in that** said environment lighting (3) comprises a plurality of light sources (31, 32, 33), said plurality of light sources being at the optical infinite of said participating medium (10).

3. Computer implemented method according to one of claims 1 to 2, **characterized in that** the estimation of said first set of coefficients of projection is made by projection of an environment mapping representative of said environment lighting (3) into said orthonormal basis of spherical functions.

4. Computer implemented method according to one of claims 1 to 3, **characterized in that** said spherical functions are of the spherical harmonic type.

5. Computer implemented method according to one of claims 1 to 4, **characterized in that** said first and second sets of coefficients of projection are stored in at least one table of a memory associated with at least one graphics processor.

6. Device (4) configured for estimating the quantity of light scattered by a homogeneous participating medium (10), the light being sent out by a environment lighting (3), **characterized in that** the device comprises:

   - means for estimating a first set of coefficients of projection in an orthonormal basis of spherical functions, said first set of coefficients of projection being representative of the incident luminance function received by said participating medium (10),
   - means for estimating a second set of coefficients of projection in said orthonormal basis of spherical functions, said second set of coefficients of projection being representative of the phase function of said participating medium (10),
   - means for estimating the quantity of light scattered by said participating medium (10), along at least one direction of diffusion of the light, from said first and second sets of coefficients of projection, the estimation of the quantity of light scattered comprising a direct analytical computation of an integral representative of the light diffusion along the at least one direction of the light in the homogeneous participating medium.

**Patentansprüche**

1. Computerimplementiertes Verfahren zum Schätzen der durch ein homogenes mitwirkendes Medium (10) gestreuten Lichtmenge, wobei das Licht durch eine Umgebungsbeleuchtung (3) ausgesendet wird, wobei das Verfahren die folgenden Schritte umfasst:

   - Schätzen (51, 61) eines ersten Satzes von Projektionskoeffizienten in einer Orthonormalbasis von Kugelfunktionen, wobei der erste Satz von Projektionskoeffizienten die durch das mitwirkende Medium (10) empfangene einfallende Leuchtdichtefunktion repräsentiert,

- Schätzen (52, 62) eines zweiten Satzes von Projektionskoeffizienten in der Orthonormalbasis von Kugelfunktionen, wobei der zweite Satz von Projektionskoeffizienten die Phasenfunktion des mitwirkenden Mediums (10) repräsentiert,

wobei das Verfahren **dadurch gekennzeichnet ist, dass** es ferner den folgenden Schritt umfasst:

- Schätzen (53, 64) der durch das mitwirkende Medium (10) gestreuten Lichtmenge entlang mindestens einer Streurichtung des Lichts aus dem ersten und aus dem zweiten Satz von Projektionskoeffizienten, wobei das Schätzen eine direkte analytische Berechnung eines Integrals, das die Lichtdiffusion entlang der mindestens einen Richtung des Lichts in dem homogenen mitwirkenden Medium repräsentiert, umfasst.

2. Computerimplementiertes Verfahren nach Anspruch 1, **dadurch gekennzeichnet, dass** die Umgebungsbeleuchtung (3) mehrere Lichtquellen (31, 32, 33) umfasst, wobei die mehreren Lichtquellen im optischen Unendlichen des mitwirkenden Mediums (10) sind.

3. Computerimplementiertes Verfahren nach einem der Ansprüche 1 bis 2, **dadurch gekennzeichnet, dass** die Schätzung des ersten Satzes von Projektionskoeffizienten durch Projektion einer Umgebungsabbildung, die die Umgebungsbeleuchtung (3) repräsentiert, in die Orthonormalbasis von Kugelfunktionen erfolgt.

4. Computerimplementiertes Verfahren nach einem der Ansprüche 1 bis 3, **dadurch gekennzeichnet, dass** die Kugelfunktionen vom Typ Kugelharmonischer sind.

5. Computerimplementiertes Verfahren nach einem der Ansprüche 1 bis 4, **dadurch gekennzeichnet, dass** der erste und der zweite Satz von Projektionskoeffizienten in mindestens einer Tabelle eines mindestens einem Graphikprozessor zugeordneten Speichers gespeichert werden.

6. Vorrichtung (4), die dafür konfiguriert ist, die durch ein homogenes mitwirkendes Medium (10) gestreute Lichtmenge zu schätzen, wobei das Licht durch eine Umgebungsbeleuchtung (3) ausgesendet wird, **dadurch gekennzeichnet, dass** die Vorrichtung umfasst:

- Mittel zum Schätzen eines ersten Satzes von Projektionskoeffizienten in einer Orthonormalbasis von Kugelfunktionen, wobei der erste Satz von Projektionskoeffizienten die durch das mitwirkende Medium (10) empfangene einfallende Leuchtdichtefunktion repräsentiert,
- Mittel zum Schätzen eines zweiten Satzes von Projektionskoeffizienten in der Orthonormalbasis von Kugelfunktionen, wobei der zweite Satz von Projektionskoeffizienten die Phasenfunktion des mitwirkenden Mediums (10) repräsentiert,
- Mittel zum Schätzen der durch das mitwirkende Medium (10) gestreuten Lichtmenge mindestens entlang einer Streurichtung des Lichts aus dem ersten und aus dem zweiten Satz von Projektionskoeffizienten, wobei das Schätzen der gestreuten Lichtmenge eine direkte analytische Berechnung eines Integrals, das die Lichtdiffusion entlang der mindestens einen Richtung des Lichts in dem homogenen mitwirkenden Medium repräsentiert, umfasst.

**Revendications**

1. Procédé informatique d'évaluation de la quantité de lumière diffusée par un support participant homogène (10), la lumière étant émise par un environnement lumineux (3), ledit procédé comprenant les étapes suivantes :

- évaluation (51,61) d'un premier ensemble de coefficients de projection dans une base orthonormale de fonctions sphériques, ledit premier ensemble de coefficients de projection étant représentatif de la fonction de luminance incidente reçue par ledit support participant (10),
- évaluation (52,62) d'un deuxième ensemble de coefficients de projection dans ladite base orthonormale de fonctions sphériques, ledit deuxième ensemble de coefficients de projection étant représentatif de la fonction de phase dudit support participant (10),

le procédé étant **caractérisé en ce qu'**il comprend en outre l'étape suivante :

- évaluation (53, 64) de la quantité de lumière diffusée par ledit support participant (10), selon au moins une direction de diffusion de la lumière, à partir desdits premier et deuxième ensembles de coefficients de projection, ladite évaluation comprenant un calcul analytique direct d'une intégrale représentative de la diffusion de la lumière selon au moins une direction de la lumière dans le support participant homogène.

2. Procédé informatique selon la revendication 1, **caractérisé en ce que** ledit environnement lumineux (3) comprend une pluralité de sources lumineuses (31, 32, 33), ladite pluralité de sources lumineuses se situant à l'infini optique dudit support participant (10).

3. Procédé informatique selon l'une des revendications 1 à 2, **caractérisé en ce que** l'évaluation dudit premier ensemble de coefficients de projection s'effectue par la projection d'un mappage d'environnement représentatif dudit environnement lumineux (3) dans ladite base orthonormale de fonctions sphériques.

4. Procédé informatique selon l'une des revendications 1 à 3, **caractérisé en ce que** lesdites fonctions sphériques sont de type harmoniques sphériques.

5. Procédé informatique selon l'une des revendications 1 à 4, **caractérisé en ce que** lesdits premier et deuxième ensembles de coefficients de projection sont stockés dans au moins une table d'une mémoire associée à au moins un processeur graphique.

6. Dispositif (4) configuré pour évaluer la quantité de lumière diffusée par un support participant homogène (10), la lumière étant émise par un environnement lumineux (3), **caractérisé en ce que** le dispositif comprend :

- un moyen permettant d'évaluer un premier ensemble de coefficients de projection dans une base orthonormale de fonctions sphériques, ledit premier ensemble de coefficients de projection étant représentatif de la fonction de luminance incidente reçue par ledit support participant (10),
- un moyen permettant d'évaluer un deuxième ensemble de coefficients de projection dans ladite base orthonormale de fonctions sphériques, ledit deuxième ensemble de coefficients de projection étant représentatif de la fonction de phase dudit support participant (10),
- un moyen permettant d'évaluer la quantité de lumière diffusée par ledit support participant (10), selon au moins une direction de diffusion de la lumière, à partir desdits premier et deuxième ensembles de coefficients de projection, l'évaluation de la quantité de lumière diffusée comprenant un calcul analytique direct d'une intégrale représentative de la diffusion de la lumière selon au moins une direction de la lumière dans le support participant homogène.

**Fig. 1**

**Fig 2A**

**Fig 2B**

**Fig. 3**

4

41 — CPU

42 — Graphics card

420 — GPU

421 — GRAM

4210 — Parameters representative of the medium

4211 — 1rst coeff of proj

4212 — 2nd coeff of proj

4213 — 2nd coeff of proj

4214 — Quantity of scattered light

430 — Display

43 — Display

44 — Devices I/O

45 —

46 — ROM

460 — Prog

47 — RAM

470 — Prog

471 — Parameters representative of the medium

48 — Power supply

**Fig. 4**

50 — Init

Estimation of 1st coefficients of projection

— 51

Estimation of 2nd coefficients of projection

— 52

Quantity of scattered light estimation

— 53

**Fig. 5**

60 — Init

Estimation of 1<sup>st</sup> coefficients of projection ~ 61

Estimation of 2<sup>nd</sup> coefficients of projection ~ 62

Storage of coefficients of projection ~ 63

Quantity of scattered light estimation ~ 64

**Fig. 6**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2009003143 A

## Non-patent literature cited in the description

- A fast rendering method for a scene with particular media of anisotropic scattering property. *Proceedings of Computer Graphics International,* 22 June 2005

- *Spherical harmonic lighting,* 15 February 2010, ht-tp://en.wikipedia.org/wiki(Spherical harmonic lighting
- *Cube mapping,* 04 September 2010, http://en.wikipedia.org/w/index.php?title=Cube mapping&old-id=382811314